# EUROPEAN PATENT SPECIFICATION

(11) **EP 3 589 489 B1**
(45) Date of publication and mention of the grant of the patent: **25.11.2020**
(21) Application number: 18708219.3
(22) Date of filing: 21.02.2018
(51) Int. Cl.: B32B 38/06, B32B 5/26, B32B 9/02, C14B 1/56, C14B 7/02, B32B 37/06, B32B 38/10, B32B 38/16

(54) **METHOD FOR MAKING A PRODUCT OF THE TYPE COMPRISING A LAMINAR SUPPORTING ELEMENT AND AN UPGRADING LAYER AND CORRESPONDING PRODUCTION SYSTEM**
VERFAHREN ZUR HERSTELLUNG EINES PRODUKTS MIT EINEM LAMINAREN TRAGELEMENT UND EINER ERWEITERUNGSSCHICHT UND ZUGEHÖRIGES HERSTELLUNGSSYSTEM
PROCÉDÉ PERMETTANT DE FABRIQUER UN PRODUIT DU TYPE COMPRENANT UN ÉLÉMENT DE SUPPORT LAMINAIRE ET UNE COUCHE DE VALORISATION ET SYSTÈME DE PRODUCTION CORRESPONDANT

(30) Priority: 28.02.2017 IT 201700022387
(43) Date of publication of application: 08.01.2020
(73) Proprietor: Agosti, Giacomino Adolfo, 36070 Castelgomberto (VI) (IT)
(72) Inventor: Agosti, Giacomino Adolfo, 36070 Castelgomberto (VI) (IT)
(74) Representative: Ziliotto, Tiziano
(86) International application number: PCT/IB2018/051062
(87) International publication number: WO 2018/158657

(56) References cited:
- WO-A1-2006/100055
- WO-A1-2015/110953
- Anonymous: "Humidity", Wikipedia, the free encyclopedia, 4 February 2017 (2017-02-04), XP055424865, Retrieved from the Internet: URL:https://web.archive.org/web/2017020409 3552/https://en.wikipedia.org/wiki/Humidit y [retrieved on 2017-11-14]

## Description

### TECHNICAL FIELD OF THE INVENTION

The invention concerns a method for making a product of the type comprising a supporting element whose visible surface is subjected to a finishing treatment carried out by means of an upgrading layer. In particular, the invention concerns a method for upgrading hides that are not of top quality in order to obtain imitation leather or upgraded leather.

The invention concerns also a system for the implementation of said method.

### DESCRIPTION OF THE STATE OF THE ART

It should be noted that throughout this description the term "product" is used to indicate imitation leather or upgraded leather comprising a generally laminar supporting element, the visible surface of which is subjected to a treatment that determines at least some of the aesthetic characteristics of the product.

As is known, leather is widely used in many sectors, such as, for example, the automotive sector and the sectors of furniture, clothing, footwear. Among the various types of leather, the noblest and most expensive part of leather, called pure-grain or full-grain leather, is particularly appreciated, owing to its softness and pleasant feel to the touch.

In order to manufacture also less expensive products having, however, special characteristics and/or characteristics comparable to those of full-grain leather, the known art has proposed laminar textile and synthetic products, even constituted by agglomerates of microfibres, which imitate the aesthetic aspect of natural leather, reduce production costs and improve some physical and mechanical characteristics.

Some manufacturing processes employed to make these products substantially consist in the application, on a laminar support or on low quality hides, of a film of synthetic material obtained by drying one or more layers of polyurethane, even coloured if required.

In a process of known type the hide, which constitutes the supporting element, is treated in a first part of an apposite system through the application of one or more layers of a synthetic material typically consisting of polyurethane. These layers are obtained through the application of said synthetic material in the fluid or liquid state using, for example, spraying booths or roller coating machines, followed by a drying step which serves to consolidate (polymerize) the material.

The drying step is typically carried out by making the assembly slide in heated tunnels.

If necessary, the application of the layer and the drying of the synthetic material can be carried out in sequence, one after the other, in order to increase the layers of material deposited on the hide.

The hide with the layer of synthetic material is then trimmed and successively subjected to a second step, even at a later moment and typically in a different remote system (for example, at third party premises), wherein said second step consists of a printing operation performed with roller or plate presses in order to impress the desired grain or pattern on the layer of synthetic material.

During said pressing operation the hide and the layer of synthetic material are subjected to high pressure (250÷300 atm) and high temperature (100÷110°C) which considerably reduce their thickness (to values in the order of 0.1÷0.2mm) and compact their structure.

Disadvantageously, this pressing step deteriorates the characteristics of the hide in terms of softness or feel to the touch, and increases its rigidity.

According to the known technique, further steps are therefore necessary in order to make the leather more pleasant and soft to the touch. These steps typically include a treatment in a special system (for example, at third party premises), such as stretching or tumbling or equivalent treatments.

The final product is thus ready to be introduced in the market and to be used (for the production of shoes, furniture or other products).

This production method, however, poses some limitations and drawbacks.

A first drawback lies in that the layer or layers of synthetic material applied to the supporting element, in addition to undesirably stiffening the product and thus requiring said stretching or tumbling treatments, contributes/contribute to increasing its thickness, thus further affecting the flexibility and softness and/or pleasant feel to the touch of the final product.

Another drawback posed by said method is represented by the high number of treatments to which the hide is subjected in order to obtain the final product. This limits production speed and consequently increases production costs.

Another drawback posed by the known method is constituted by the continuous interruptions between the successive processing steps to which the supporting element is subjected. This further limits production speed and consequently increases production costs.

A further drawback is constituted by the fact that the hides need to be moved during the various processing steps, in particular when the processing steps need to be carried out in sites equipped for performing different specific treatments, for example pressing or tumbling, to even greater disadvantage if these treatments need to be carried out at the premises of third parties. This further limits production speed and consequently increases production costs.

Another drawback related to said production method lies in the complexity and overall dimensions of the system used to manufacture the product.

Manufacturing methods and system according to the state of the art are known, for instance, from document WO 2015/110953 A1 and WO 2006/100055 A1.

It is the object of the present invention to overcome the drawbacks mentioned above.

In particular, it is a first object of the invention to provide a method and a corresponding system that make it possible to obtain a product that is softer and more pleasant to the touch compared to analogous products obtained with the known techniques.

It is another object of the invention to provide a method and a corresponding system that make it possible to obtain a product whose characteristics, compared to the analogous products made using the known techniques, are more similar to those of full-grain leather.

It is a further object of the invention to provide a method and a system that, compared to the known methods and systems, make it possible to reduce production times.

It is a further object of the invention to provide a method and a system that, compared to the known methods and systems, make it possible to reduce production costs.

It is another object of the invention to provide a method and a system that, compared to the known methods and systems, make it possible to increase the quantity of product obtainable per unit of time.

### SUMMARY OF THE PRESENT INVENTION

The above-indicated drawbacks are overcome by the teaching of the present invention, which is defined by the independent claims.

The present invention is based on the general consideration that it is desirable to obtain a final product made using temperatures and pressures that are completely different from those used in the systems of known type. This makes it possible to completely avoid affecting the softness and the thickness of the laminar support constituted by the leather to be upgraded.

According to a first aspect of the present invention, therefore, the same concerns a method for the production of imitation leather or upgraded leather comprising a laminar support and an upgrading layer, wherein the method comprises the following steps:
- applying at least one layer of a synthetic substance to a surface of said laminar support;
- applying at least one layer of a protective substance to a surface of a supporting film;
- treating said at least one layer of said synthetic substance in such a way that said synthetic substance has an absolute moisture value included between 12% and 25%;
- coupling said supporting film provided with said protective substance to said laminar support provided with said layer of synthetic substance, in such a way as to place said protective substance in contact with said synthetic substance;
- embossing said layer of synthetic substance by exerting a predetermined force per unit of surface area on said supporting film and/or on said laminar support by means of an embossed surface which is placed in contact with said supporting film in such a way as to press said protective substance against said synthetic substance and in such a way that the morphological characteristics impressed on said embossed surface are reproduced on said layer of synthetic substance;
- consolidating the union between said protective substance and said synthetic substance;
- removing said supporting film from said at least one layer of said protective substance.

Preferably, the absolute moisture value is included between 15% and 23%, more preferably included between 17% and 22%, and even more preferably equal to 18%.

Preferably, the moisture value is measured using the "AQUA-PICCOLO" moisture meter produced by the German company KPM (K.P. Mundinger GmbH).

In a preferred embodiment, the step of subjecting said at least one layer of said synthetic substance to a treatment intended to obtain said absolute moisture value for said synthetic substance consists in heating said synthetic substance.

In a preferred embodiment, the step of subjecting the layer of said synthetic substance to a treatment intended to obtain said absolute moisture value for said synthetic substance comprises also a step in which the absolute moisture value of the synthetic substance is measured or assessed.

Preferably, said consolidation step comprises a step during which said protective substance and said synthetic substance are heated to a given temperature.

Preferably, during said consolidation step said temperature has a value included between 80 and 130 °C, more preferably a value included between 90 °C and 110 °C and even more preferably a value equal to 95 °C.

According to a preferred embodiment, said embossing step is performed after said coupling step.

Preferably, said coupling step is carried out by pressing said supporting film provided with said protective substance against said laminar support provided with said layer of synthetic substance.

In a preferred embodiment, during said pressing step belonging to said coupling step a pressing element is used, preferably at least one pressing cylinder, which is hydraulically operated at a pressure whose value is preferably included between 5 atm and 40 atm, more preferably included between 10 atm and 25 atm, even more preferably equal to 15 atm.

Preferably, said coupling step comprises a step during which said protective substance and said synthetic substance are heated to a given temperature.

Preferably, during said heating step belonging to said coupling step said temperature has a value included between 90 °C and 120 °C, more preferably a value included between 95 °C and 110 °C and even more preferably a value equal to 100 °C.

In a preferred embodiment, in order to obtain the desired pressing action, during said embossing step a pressing element is used which comprises said embossed surface, preferably at least one embossed cylinder, operated hydraulically at a pressure value preferably included between 30 atm and 80 atm, more preferably included between 50 atm and 70 atm, even more preferably equal to 60 atm.

In a preferred embodiment, said embossing step comprises a step during which said protective substance and said synthetic substance are heated to a given temperature.

Preferably, during said embossing step said temperature has a value included between 100 °C and 180 °C, more preferably a value included between 110 °C and 150 °C, and even more preferably a value equal to 130 °C.

In another preferred embodiment, said coupling step and said embossing step are performed simultaneously.

Preferably, said coupling and embossing steps comprise a step during which said supporting film provided with said protective substance is pressed against said laminar support provided with said layer of synthetic substance.

Preferably, during said pressing step belonging to said coupling and embossing steps, a pressing element is used, preferably at least one embossed pressing cylinder, hydraulically operated at a pressure whose value is preferably included between 10 atm and 60 atm, more preferably included between 15 atm and 40 atm, even more preferably equal to 20 atm.

In a preferred embodiment, said coupling and embossing steps comprises a step during which said protective substance and said synthetic substance are heated to a given temperature.

Preferably, during said coupling and embossing steps said temperature has a value included between 60 °C and 120 °C, more preferably included between 80 °C and 110 °C, and even more preferably equal to 90 °C.

According to a preferred embodiment, a stretching step is carried out between said coupling step and said embossing step, during which said supporting film provided with said protective substance and said laminar support provided with said layer of synthetic substance are stretched.

In a preferred embodiment, one or more of said pressing operations has a value whose trend is substantially constant over time.

In another preferred embodiment, one or more of said pressing operations has a value whose trend is substantially variable over time.

In a preferred embodiment, one or more of said temperatures has a value whose trend is substantially constant over time.

In another preferred embodiment, one or more of said temperatures has a value whose trend is substantially variable over time.

In preferred embodiments, the laminar support comprises a hide and/or a piece of natural fabric and/or of synthetic fabric and/or of mixed fabric.

Preferably, said synthetic substance applied to said laminar support comprises a resin, preferably a polyurethane resin or an acrylic resin or a butadiene resin.

Preferably, the layer of said synthetic substance applied to said laminar support has a thickness included between 0.2 mm and 0.7 mm, more preferably included between 0.3 mm and 0.55 mm and even more preferably equal to 0.4 mm.

In preferred embodiments, the supporting film comprises a polyester film or a paper film.

The thickness of the supporting film is preferably included between 0.07 mm and 0.2 mm, more preferably included between 0.09 mm and 0.18 mm and even more preferably is equal to 0.12 mm.

Preferably, the protective substance comprises a polyurethane resin.

Preferably, the layer of said protective substance has a thickness included between 0.02 mm and 0.07 mm, more preferably included between 0.03 mm and 0.06 mm and even more preferably equal to 0.04 mm.

According to another aspect of the present invention, the latter concerns a system for the production of imitation leather or upgraded leather comprising a laminar support and an upgrading layer, wherein said system comprises:
- feeding means suited to feed a supporting film on which at least one layer of a protective substance is applied;
- application means suited to apply at least one layer of a synthetic substance to at least one surface of said laminar support;
- treatment means suited to treat said at least one layer of said synthetic substance and suited to reduce the absolute moisture value of said synthetic substance;
- coupling means suited to couple said supporting film provided with said protective substance with said laminar support provided with said layer of synthetic substance, in such a way as to place said protective substance in contact with said synthetic substance;
- embossing means suited to exert a pressure on said supporting film and/or on said laminar support in such a way as to press said protective substance against said synthetic substance, said embossing means comprising an embossed surface which is placed in contact with said supporting film in such a way that the morphological characteristics impressed on said embossed surface are reproduced on said layer of synthetic substance.

Preferably, the treatment means comprise heating means.

In a preferred embodiment, the system comprises means for measuring the absolute moisture value of the synthetic substance, which are associated with the treatment means.

In a preferred embodiment, the system comprises consolidation means intended to consolidate said protective substance and said synthetic substance and positioned downstream of said embossing means.

Preferably, said consolidation means comprise heating means.

Preferably, in particular, the coupling means comprise two opposing cylinders suited to couple the supporting film with the laminar support in such a way as to place the protective substance and the synthetic substance in contact with each other and to press them together.

Preferably, the embossing means comprise two opposing cylinders, wherein a first one of said cylinders is placed in contact with said supporting film and the external surface of said first cylinder comprises said embossed surface.

In another preferred embodiment, the embossing means comprise a linear press made up of two opposing parts, wherein a first one of said parts is placed in contact with said supporting film and the external surface of said first part comprises said embossed surface.

According to a preferred variant embodiment, the coupling means and the embossing means coincide. In this embodiment, preferably, the coupling and embossing means comprise two opposing cylinders, wherein a first one of said cylinders is placed in contact with said supporting film and the external surface of said first cylinder comprises said embossed surface.

Preferably, said application means comprise at least one spray nozzle and/or a cylinder system and/or a doctor blade system and/or equivalent systems.

In a preferred embodiment, the system furthermore comprises a unit suited to detect the geometric shape of the surface of the laminar support, suited to activate/deactivate the application means.

Preferably, the system furthermore comprises a unit for detaching the supporting film, the detaching unit being preferably arranged downstream of the consolidation means, if provided.

In a preferred embodiment, the system comprises stretching means located between said coupling means and said embossing means and suited to stretch said supporting film provided with said protective substance and said laminar support provided with said layer of synthetic substance.

Preferably, said stretching means comprise a dandy roll system.

According to a further aspect of the present invention, the latter concerns imitation leather or upgraded leather comprising a laminar support and an upgrading layer, said imitation leather or upgraded leather being obtained with the method or the system described above.

### BRIEF DESCRIPTION OF THE DRAWINGS

Further advantages, objects and characteristics, as well as further embodiments of the present invention are defined in the claims and are illustrated here below through the following description, in which reference is made to the attached drawings; in the drawings, corresponding or equivalent characteristics and/or component parts of the present invention are identified by the same reference numbers. In particular, in the figures:
- Figure 1 shows a schematic view of the several operations included in a method that is the subject of the invention within a system that is also the subject of the invention;
- Figures 1A-1G show enlarged details of Figure 1;
- Figure 2 shows a first variant of the system and the related method illustrated in Figure 1;
- Figures 2A-2G show enlarged details of Figure 2;
- Figure 3 shows another variant of the system and the related method illustrated in Figure 1;
- Figure 4 shows a further variant of the system and the related method illustrated in Figure 1;
- Figure 5 shows a detail of a further variant of the system and the related method illustrated in Figure 1.

### DETAILED DESCRIPTION OF THE PRESENT INVENTION

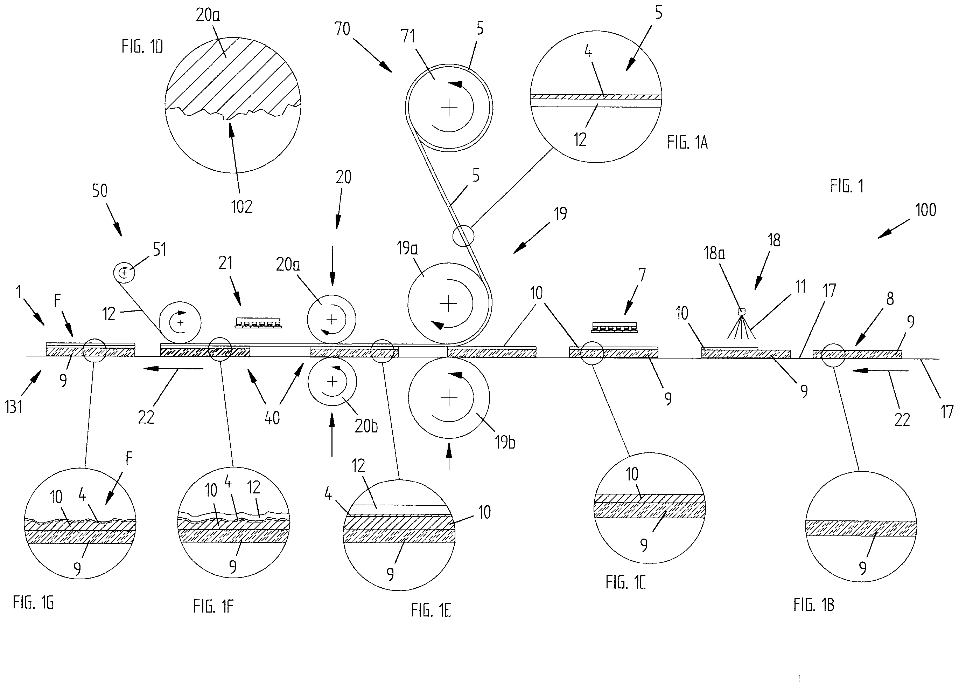

The continuous method for making a product 1 constituted by imitation leather or upgraded leather will now be described with reference to the diagram illustrating the system 100 shown in Figure 1.

The product 1 constituted by imitation leather or upgraded leather preferably comprises a laminar support 9 and an upgrading layer F.

The laminar support 9 is preferably constituted by a hide, even of low quality. For the sake of simplicity, in the following description the laminar support 9 will be also referred to simply using the term "hide".

In other embodiments, the laminar support can be of a different type, for example the crust deriving from leather processing, and in general supporting elements to be upgraded, which at the end of the treatment will have special characteristics and/or characteristics which can even be compared to those of full-grain leather.

The method substantially includes the application of at least one layer 10 of a synthetic substance 11 on a surface 8 of the hide 9.

According to a preferred aspect of the present invention, the layer 10 reproduces in the final product 1 the desired aesthetic surface characteristics corresponding to the morphological characteristics impressed on an embossed surface 102, as will be described in greater detail below.

In the preferred example of embodiment of the method proposed herein and schematically illustrated in Figure 1, the embossed surface 102 is preferably constituted by the external embossed surface of a pressing cylinder 20a (Figure ID).

Concerning the method for making the product 1, the hide 9, in the case at hand a low-quality hide, is arranged on a conveyor belt 17 which makes it mode forward along a preferably rectilinear direction 22 towards application means 18 suited to apply a synthetic substance 11, which in the final product 1 will substantially constitute said layer 10 of synthetic substance 11.

The application means 18 preferably comprise a plurality of spray nozzles 18a fed by a special tank, not illustrated herein, which contains the synthetic substance 11. In other embodiments said application means 18 may comprise a sprayer suited to direct the product onto the surface 8 to be treated or a brush or systems consisting of a doctor blade or a cylinder or equivalent systems, also of the type known per se and therefore not described here below.

According to a preferred embodiment of the method, the synthetic substance 11 comprises a polyurethane resin.

In other embodiments, the synthetic substance may be of a different type, for example an acrylic resin or a butadiene resin.

Furthermore, preferably, the synthetic substance is of a coloured type, for example comprising colour pigments. The colour is preferably selected according to the desired aesthetic appearance of the final product 1.

The synthetic substance 11 applied to the upper visible surface 8 of the hide 9 makes it possible to upgrade the surface, which in itself appears as being of a lower quality compared to high quality leather, such as full-grain leather.

The synthetic substance 11 is preferably in the liquid state or in any case its viscosity is such as to allow a substantially homogeneous layer to be applied to the upper surface 8 of the hide 9.

The thickness of the synthetic substance 11 has preferably a value included between 0.2 mm and 0.7 mm, more preferably a value included between 0.3 mm and 0.55 mm and even more preferably a value equal to 0.4 mm.

At the moment of its application through the application means 18, the synthetic substance 11 has an appropriate viscosity value. Said viscosity has preferably a value included between 3 and 8 minutes, measured with a Ford Cup viscometer as a measuring instrument.

Furthermore, at the moment of application through the application means 18, said synthetic substance 11 has a high moisture value, substantially around 70÷80%.

The hide 9 provided with the layer 10 of synthetic substance 11 is successively subjected to a thermal treatment by conveying it towards suitable heat treatment means 7.

During the thermal treatment, which is substantially a heating treatment, the synthetic substance 11 is subjected to consolidation/polymerization and its characteristic parameters are gradually modified.

According to the invention, the thermal treatment is carried out in such a way that the synthetic substance 11 is not completely polymerized, that is, in such a way that the some does not become completely dry.

Preferably, the thermal treatment is carried out in such a way that at the end of the treatment the absolute moisture value of the synthetic substance 11 is preferably included between 12% and 25%, preferably included between 15% and 23%, more preferably included between 17% and 22%, and even more preferably equal to 18%.

The definition "absolute moisture" is used to indicate the water content of the material expressed as a percentage of the total weight of the material itself.

Preferably, the desired parameter of absolute moisture is obtained by controlling the duration of the heating treatment to which the synthetic substance 11 is subjected.

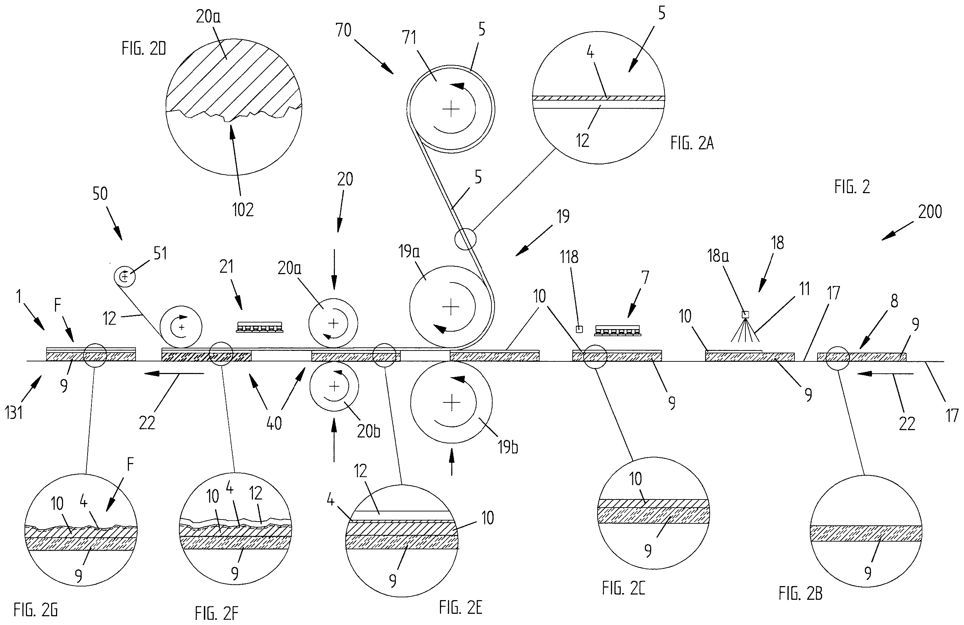

In other embodiments, the desired parameter of absolute moisture is obtained by controlling it through suitable control means 118 associated with the heating means 7, as schematically shown in the variant embodiment of the system 200 illustrated in Figure 2. The system 200 of Figure 2 differs from the system 100 of Figure 1 only due to the presence of said control means 118. Preferably, the control means 118 comprise a moisture meter for solid materials, suited to measure the absolute moisture value of the synthetic substance 11 downstream of the heating means 7.

In particular, the moisture meter used to measure the absolute moisture value of the synthetic substance 11 is constituted by the "AQUA-PICCOLO" moisture meter produced by the German company KPM (K.P. Mundinger GmbH).

In other embodiments, the desired absolute moisture value can be obtained by controlling other significant parameters, for example by controlling the duration and the temperature of the treatment to which the synthetic substance 11 is subjected, or even through experimental tests intended to empirically define the time and temperature parameters of the treatment to which the synthetic substance 11 is subjected.

According to a preferred aspect of the invention, a laminar element 5 is coupled with the hide 9 provided with the layer 10 of synthetic substance 11 which is subjected to the thermal treatment as described above.

The laminar element 5 preferably comprises a supporting film 12 and a protective substance 4, as shown in detail in Figure 1A.

In the embodiment illustrated and described herein, the laminar element 5 is preferably unwound by an unwinding unit 70 preferably comprising a roller 71 on which the laminar element 5 is wound.

In variant embodiments, the laminar element comprising the supporting film with the protective substance applied thereto can be prepared in a suitable preparation unit directly associated and in line with the system 100 itself.

The supporting film 12 of the laminar element 5 preferably comprises a layer made of polyester.

In variant embodiments, the supporting film can be made with different materials, for example it can be a sheet of paper.

The thickness of the supporting film 12 is preferably included between 0.07 mm and 0.2 mm, more preferably included between 0.09 mm and 0.18 mm and even more preferably it is equal to 0.12 mm.

The protective substance 4 preferably comprises a polyurethane substance.

The protective substance 4 is preferably transparent.

In other embodiments, the protective substance can be constituted by suitable emulsions.

The thickness of the protective substance 4 is preferably included between 0.02 mm and 0.07 mm, more preferably between 0.03 mm and 0.06 mm and even more preferably it is equal to 0.04 mm.

In particular, according to said preferred aspect of the invention, said coupling operation is performed in such a way as to place the layer 10 of synthetic substance 11 associated with the hide 9 in contact with the protective substance 4 of the laminar element 5.

The coupling between the laminar element 5 and the hide 9 provided with the layer 10 of synthetic substance 11 is obtained through coupling means, or a coupling unit, indicated as a whole by 19 and preferably arranged downstream of the heat treatment means 7. In the case at hand, the coupling unit 19 comprises a pair of cylinders 19a, 19b operating in such a way as to place the protective substance 4 of the laminar element 5 in contact with the layer 10 of synthetic substance 11 present on the upper surface 8 of the hide 9.

The pair of cylinders 19a, 19b preferably act in such a way as to press the laminar element 5 against the layer of synthetic substance 11 present on the upper surface 8 of the hide 9 exerting a predetermined force per unit of surface area at a predetermined temperature T1.

For this purpose, the cylinders 19a, 19b of said pair of cylinders can be positioned at a predetermined distance from each other. Preferably, the upper cylinder 19a is operated hydraulically at a predetermined pressure P1 while the lower cylinder 19b is kept stationary.

Furthermore, heating means are provided which are suited to bring the pressed assembly to the desired temperature T1.

In a preferred embodiment, the heating means comprise heating means suited to heat the external surface of one or both of the cylinders 19a, 19b.

In other embodiments, the heating means can be made in a different way, for example by providing electrical resistances in proximity to the coupling area or positioning the cylinders inside an oven.

Furthermore, the advance speed V of the conveyor belt 17 which makes the assembly move forward along the rectilinear direction 22 between the two cylinders 19a, 19b is conveniently controlled in order to favour the correct mutual coupling of the protective substance 4 with the layer 10 of synthetic substance 11.

Preferably, the value of said operating pressure P1 is included between 5 atm and 40 atm, more preferably between 10 atm and 25 atm and even more preferably it is equal to 15 atm.

Preferably, the value of said temperature T1 is included between 90 °C and 120 °C, more preferably between 95 °C and 110 °C and even more preferably it is equal to 100 °C.

Preferably, the value of the advance speed V of the conveyor belt 17 is included between 5 m/minute and 10 m/minute.

In a preferred embodiment, for example, the heating means 7 comprise a 10 m long oven at a temperature of 120°C and the conveyor belt 17 advances at a speed of 8 m/minute inside the oven 7.

In another preferred embodiment, for example, the conveyor belt is conveniently shaped and performs two runs inside a 10 m long oven at a speed of 10 m/minute, the temperature of the oven being 100°C.

According to a preferred aspect of the invention, the assembly comprising the hide 9 provided with the layer 10 of synthetic substance 11 and the laminar element 5 comprising the supporting film 12 with the protective substance 4, shown in Figure IE, is conveyed towards embossing means or an embossing unit indicated as a whole by 20, preferably arranged downstream of the coupling means 19. The embossing unit 20 preferably comprises a pair of cylinders 20a, 20b which act in such a way as to mutually press the protective substance 4 of the laminar element 5 and the layer 10 of synthetic substance 11 present on the upper surface 8 of the hide 9 against each other.

Furthermore, preferably, according to an advantageous aspect of the present invention, the cylinder 20a which comes in contact with the laminar element 5, meaning the upper cylinder 20a in Figure 1, has an embossed external surface 102, as schematically shown in the detail illustrated in Figure ID.

The pair of cylinders 20a, 20b preferably operate in such a way as to press the laminar element 5 against the layer of synthetic substance 11 present on the upper surface 8 of the hide 9 exerting a predetermined force per unit of surface area at a predetermined temperature T2.

For this purpose, the cylinders 20a, 20b of said pair of cylinders can be positioned at a predetermined distance from each other. Preferably, the upper cylinder 20a is hydraulically operated at a predetermined pressure P2 while the lower cylinder 20b is kept stationary.

Furthermore, heating means are provided which are suited to bring the pressed assembly to the desired temperature T2.

In a preferred embodiment, the heating means comprise heating means suited to heat the external surface of one or both of the cylinders 20a, 20b.

In other embodiments, the heating means can be made in a different way, for example by providing electrical resistances in proximity to the embossing area or positioning the cylinders inside an oven.

Preferably, the value of said operating pressure P2 is included between 30 atm and 80 atm, more preferably between 50 atm and 70 atm and even more preferably it is equal to 60 atm.

Preferably, the value of said temperature T2 is included between 100 °C and 180 °C, more preferably between 110 °C and 150 °C and even more preferably it is equal to 130 °C.

According to the invention, during said pressing step, thanks to the absolute moisture of the synthetic substance 11 and to the presence of the layer of protective substance 4, the morphological characteristics impressed on the embossed surface 102 of the cylinder 20a are reproduced on the layer of synthetic substance 11. The pattern defined by the embossed surface 102 of the cylinder 20a is actually impressed in negative on the layer of synthetic substance 11.

The absolute moisture of the synthetic substance 11 ensures such a consistency that it is possible to reproduce the pattern on the embossed surface 102 of the cylinder on the synthetic substance 11 itself. At the same time, the layer of protective substance 4 prevents the synthetic substance 11 from sticking to the supporting film 12. Furthermore, the layer of protective substance 4 is preferably transferred on the layer 10 of synthetic substance 11. At the exit of the embossing unit 20, therefore, the result will be a semi-finished product 40, shown in detail, for example, in Figure IF, and comprising the hide 9, the layer 10 of synthetic substance 11 with the desired pattern impressed thereon, the layer of protective substance 4 and the supporting film 12.

During the pressing operation, the layer of synthetic substance 11 undergoes a further polymerization process, due to the effect of the heating step, towards complete consolidation.

Advantageously and preferably, the semi-finished product 40 undergoes a further operation intended to favour complete polymerization and/or drying and to further consolidate the layer 10 of synthetic substance 11 on the hide 9, in addition to the film of protective substance 4.

This operation preferably comprises a heating operation at a predetermined temperature T5 intended to heat the synthetic substance 11 and the protective substance 4.

This operation preferably comprises the use of further heating means 21, for example an oven.

Preferably, the value of said temperature T5 is included between 80 °C and 130 °C, more preferably between 90 °C and 110 °C, and even more preferably it is equal to 95 °C.

In variant embodiments, however, said further heating means may be absent.

In this case, the consolidation step can take place at ambient temperature, obviously in a longer time compared to the case in which said further heating means are present.

At the exit of the further heating means 21, therefore, the result will be the product consisting of the hide 9 provided with the upgrading film F constituted by the layer 10 of synthetic substance 11 and by the protective substance 4, and finally the supporting film 12.

Downstream of the heating means 21 and in proximity to the unloading area 131 a separation unit 50 is preferably identified, which is suited to separate the supporting film 12 from the product 1, so that said supporting film 12 can be preferably wound on a special winding cylinder 51 and recovered so that it can be possibly reused.

At the exit of the separation unit 50, therefore, the result will be the desired final product 1 consisting of the laminar support (hide) 9 provided with the upgrading film F constituted by the layer 10 of synthetic substance 11 and by the protective substance 4.

Advantageously, the final product 1 will consist of soft leather pleasant to the touch, with no need for the further stretching or tumbling steps usually performed in the traditional methods of known type.

If necessary, according to the customer's needs, the final product 1 can be subjected to further processing steps intended to obtain the desired opacity and/or brightness and/or pastiness.

Still to advantage, the steps required to obtain the final product 1 are reduced compared to the systems of known type. Furthermore, all of the manufacturing steps can be carried out in the same system 100, with no need for transfers and/or storage and/or transport to the premises of third parties in order to carry out further processing steps. This increases production speed and thus reduces production costs.

In the embodiment described herein, furthermore, the system 100 makes it possible to obtain a continuous processing cycle, with particular benefits in terms of production speed, reduced overall dimensions of the system and thus reduced costs for the production and/or setting up of the system.

In particular, in the system 100 carried out according to the preferred embodiment, the coupling unit 19 and the embossing unit 20 which join the laminar layer 5 to the hide 9 provided with the layer of synthetic substance 11 operate in such a way as to carry out the coupling, pressing and thermal treatment in a continuous way, while the cylinders 19a, 19b, 20a, 20b rotate and the conveyor belt 17 moves forward. In addition to the above, as already explained, the control of said parameters of speed V, pressure P1, P2 and temperature T1, T2 has a considerable effect on the desired characteristics of the final product 1.

In the preferred embodiment illustrated in Figure 1 and described with reference to the same, the step of coupling the laminar element 5 with the hide 9 provided with the layer 10 of synthetic substance 11 takes place before the pressing step. In a variant embodiment, however, said steps of the method can be performed substantially at the same time.

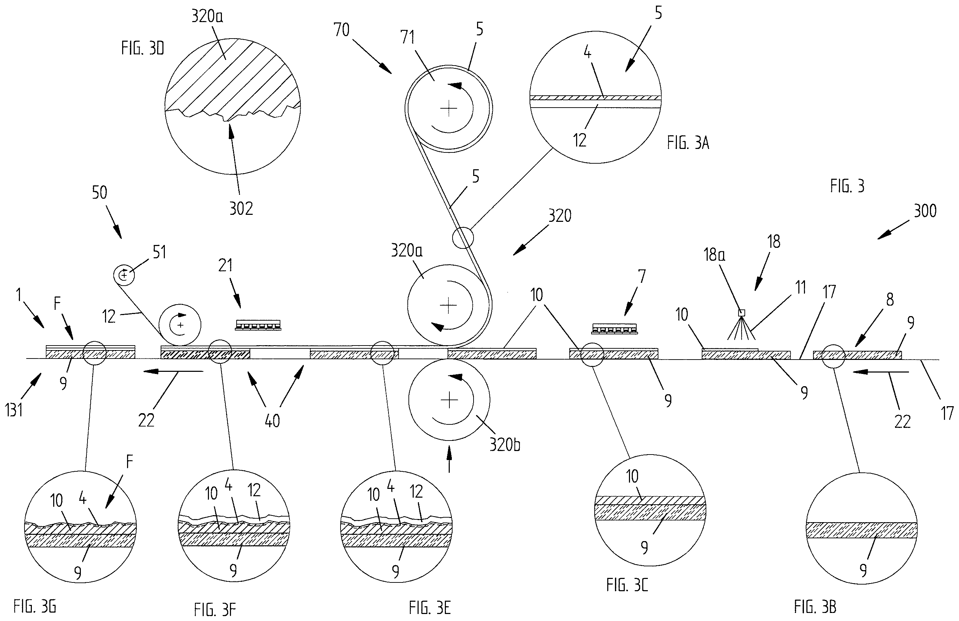

By way of example and with reference to the variant embodiment of the system 300 illustrated in Figure 3, the steps of coupling and embossing the laminar element 5 by pressing it against the hide 9 provided with the layer 10 of synthetic substance 11 take place at the same time in a coupling and embossing unit 320.

For this purpose, the coupling and embossing unit 320 comprises two rotary cylinders 320a, 320b which, preferably, operate in such a way as to couple and press against each other the protective substance 4 of the laminar element 5 and the layer 10 of synthetic substance 11 present on the upper surface 8 of the hide 9.

Preferably, the cylinder 320a that comes in contact with the laminar element 5, meaning the upper cylinder 320a in the figure, has an embossed external surface 302, as schematically shown in the detail represented in Figure 3D.

The pair of cylinders 320a, 320b preferably operates in such a way as to press the laminar element 5 against the layer of synthetic substance 11 present on the upper surface 8 of the hide 9 exerting a predetermined force per unit of surface area at a predetermined temperature T3.

For this purpose, the cylinders 320a, 320b of said pair of cylinders can be positioned at a predetermined mutual distance. Preferably, the upper cylinder 320a is hydraulically operated at a predetermined pressure P3 while the lower cylinder 320b is kept stationary.

Furthermore, heating means are provided which are suited to bring the pressed assembly to the desired temperature T3.

In a preferred embodiment, the heating means comprise heating means suited to heat the external surface of one or both of the cylinders 320a, 320b.

In other embodiments, the heating means can be made in a different way, for example by providing electrical resistances in proximity to the coupling area or positioning the cylinders inside an oven.

Preferably, the value of said operating pressure P3 is included between 10 atm and 60 atm, more preferably between 15 atm and 40 atm and even more preferably it is equal to 20 atm.

Preferably, the value of said temperature T3 is included between 60 °C and 120 °C, more preferably between 80 °C and 110 °C, and even more preferably it is equal to 90 °C.

According to the invention, during said coupling and embossing step, thanks to the absolute moisture of the synthetic substance 11 and to the presence of the layer of protective substance 4, the morphological characteristics impressed on the embossed surface 302 of the cylinder 320a are reproduced on the layer of synthetic substance 11. The pattern defined by the embossed surface 302 of the cylinder 320a is actually impressed in negative on the layer of synthetic substance 11.

In the embodiments described above, the system makes it possible to obtain a continuous processing cycle, with particular benefits in terms of production speed, reduced overall dimensions of the system and thus reduced costs for the production and/or setting up of the system.

In particular, in the system according to the preferred embodiments, the coupling unit and/or the embossing unit allow the processing cycle to be carried out continuously.

In particular, this is obtained thanks to the presence of the cylinders.

In variant embodiments, however, one or more steps of the method can be carried out at different moments.

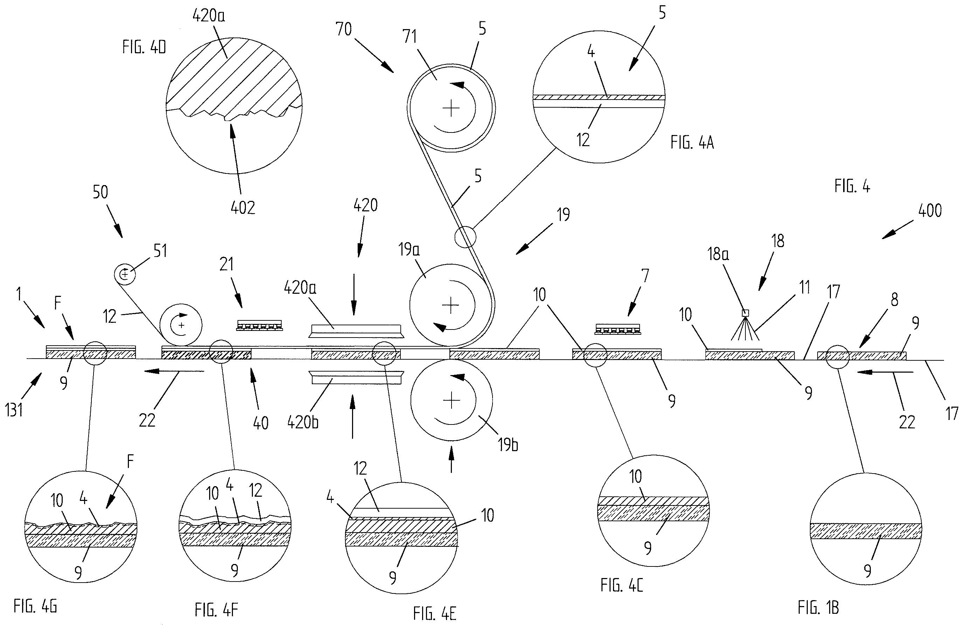

By way of example and with reference to the embodiment of the system 400 illustrated in Figure 4, the processing cycle can be carried out in a discontinuous manner and preferably the embossed surface 402 belongs to an embossing unit 420 comprising a linear, preferably vertical press.

Preferably, the part of the embossing unit 420 that comes in contact with the laminar element 5, meaning the upper part 420a of the embossing unit 420, has an embossed external surface 402, as schematically shown in the detail illustrated in Figure 4D.

The embossing unit 420 preferably operates in such a way as to press the laminar element 5 against the layer of synthetic substance 11 present on the upper surface 8 of the hide 9 exerting a predetermined force per unit of surface area at a predetermined temperature T4.

For this purpose, the parts of the press 420a, 420b can be positioned at a predetermined distance from each other. Preferably, the upper part of the press 420a is hydraulically operated at a predetermined pressure P4 while the lower part 420b is stationary.

Furthermore, heating means are provided which are suited to bring the pressed assembly to the desired temperature T4.

In a preferred embodiment, the heating means comprise heating means suited to heat the external surface of one or both of the parts of the embossing unit 420.

In other embodiments, the heating means can be made in a different way, for example by providing electrical resistances in proximity to the coupling area or positioning the embossing unit inside an oven.

Preferably, the value of said operating pressure P4 is included between 20 atm and 80 atm, more preferably between 30 atm and 60 atm and even more preferably it is equal to 50 atm.

Preferably, the value of said temperature T4 is included between 100 °C and 150 °C, more preferably between 110 °C and 140 °C and even more preferably it is equal to 130 °C.

According to the invention, during said pressing step, thanks to the absolute moisture of the synthetic substance 11 and to the presence of the layer of protective substance 4, the morphological characteristics impressed on the embossed surface 402 of the upper part 420a of the embossing unit 420 are reproduced on the layer of synthetic substance 11. The pattern defined by the embossed surface 402 is actually impressed in negative on the layer of synthetic substance 11.

Obviously, in said embodiment, during the pressing step the conveyor belt 27 will be stopped in order to allow the treatment to be performed by means of the embossing unit 420, and then will start moving again carrying the successive assembly.

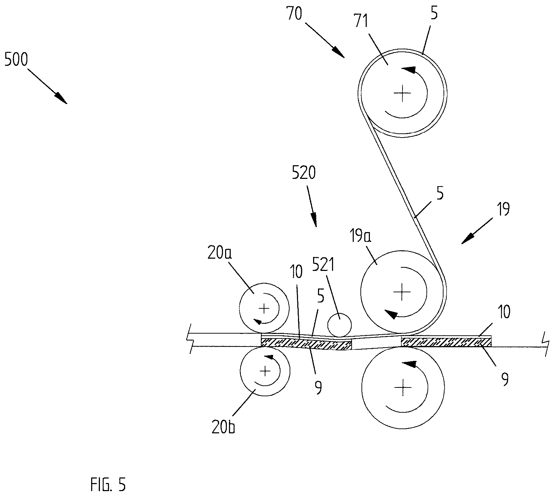

Figure 5 shows a detail of a variant embodiment of the system 500 according to the present invention.

The system 500 differs from the system 100 described with reference to Figure 1 in that a stretching unit 520 is interposed between the coupling unit 19 and the embossing unit 20.

The stretching unit 520 serves the function of conveniently stretching the layers of the assembly comprising the hide 9 provided with the layer 10 of synthetic substance 11 and the laminar element 5 provided with the supporting film 12 with the protective substance 4, before conveying it towards the embossing unit 20.

Preferably, the stretching unit 520 comprises a dandy roll system. The system control roller 521 which makes it possible to control the tension applied to the assembly being processed is shown in the figure.

Advantageously, with the method and the system which are the subjects of the present invention it is possible to obtain the final product using temperatures and pressures completely different from those used in the systems of known type. This makes it possible to completely avoid affecting the softness and the thickness of the laminar support constituted by the leather to be upgraded.

It should be noted that in all of the embodiments described above or in any case included within the scope of the present invention, the pressure and/or temperature values may not be constant or substantially constant, but can be modified according to appropriate functions that are variable over time, in order to better polymerize and stabilize the synthetic substance (resin).

As regards the laminar support 9, it can be constituted by a natural or synthetic fabric element or by natural leather, even of the full-grain type.

In addition to the above, in a further embodiment, the application means 18 may comprise also a unit suited to detect the geometrical shape of the surface of the supporting element 9.

This unit, substantially of known type, comprises systems for the acquisition and processing of images which cooperate with a control unit intended to control the activation and deactivation of the application means 18, thus minimizing the consumption of synthetic substance 11.

It is clear that the arrangement of the units described above is indicated only by way of example, as the parts and means which perform the various operations can be different and be more than one, and can be present in any number inside the system.

For example, the number of the heat treatment means and/or the number of the heating means can vary.

It should also be observed that further devices or machines suited to perform special processing cycles and obtain special effects can be arranged among the various parts of the system.

It is clear that any modifications to the system related to the installation of a number of means or units different from the one specified above, must all be considered protected by the present invention.

The above clearly shows that the method and the system proposed allow the set objects to be achieved.

In particular, it is clear that the solution proposed makes it possible to obtain a product of the type described above while at the same time improving its softness and feeling to the touch and reducing production costs.

Advantageously, the method according to the present invention makes it possible to obtain the desired aesthetic characteristics/pattern on the visible surface of the product through the use of a conveniently embossed surface, preferably an embossed cylinder.

Advantageously, the aesthetic characteristics/pattern on the visible surface of the product can be modified from time to time, by simply replacing the embossed surface in the system, for example the embossed cylinder.

Even though the invention has been described with reference to the attached drawings, during the construction stage it can be subjected to modifications, all of which fall within the scope of the inventive concept described in the claims expressed below and are therefore protected by the present patent.

## Claims

1. Method for producing imitation leather or upgraded leather (1) comprising a laminar support (9) and an upgrading layer (F), the method comprising the following steps:
- applying at least one layer (10) of a synthetic substance (11) to a surface (8) of said laminar support (9);
- applying at least one layer of a protective substance (4) to a surface of a supporting film (12);
- treating said at least one layer (10) of said synthetic substance (11) in such a way that said synthetic substance (11) has a water content expressed as a percentage of its total weight having a first value included between 12% and 25%;
- coupling said supporting film (12) provided with said protective substance (4) with said laminar support (9) provided with said layer (10) of synthetic substance (11) in such a way as to place said protective substance (4) in contact with said synthetic substance (11);
- embossing said layer of synthetic substance (11) by exerting a predetermined force per unit of surface area on said supporting film (12) and/or on said laminar support (9);
- consolidating the union between said protective substance (4) and said synthetic substance (11);
- removing said supporting film (12) from said at least one layer of said protective substance (4),
**characterized in that**
the step of exerting the predetermined force is achieved by using an embossed surface (102; 302; 402) that is placed in contact with said supporting film (12) in such a way as to press said protective substance (4) against said synthetic substance (11) and in such a way that the morphological characteristics impressed on said embossed surface (102; 302; 402) are reproduced on said layer of synthetic substance (11).

2. Method according to claim 1), **characterized in that** said first value is included between 15% and 23%, more preferably included between 17% and 22%, and even more preferably equal to 18%.

3. Method according to any of the preceding claims, **characterized in that** said step of treating said at least one layer (10) of said synthetic substance (11) in such a way that said synthetic substance (11) reaches said first value is obtained by heating said synthetic substance (11).

4. Method according to any of the preceding claims, **characterized in that** said consolidation step comprises a heating step during which said protective substance (4) and said synthetic substance (11) are heated to a given temperature (T5).

5. Method according to any of the preceding claims, **characterized in that** said embossing step is carried out after said coupling step.

6. Method according to claim 5), **characterized in that** said coupling step is carried out through a pressing step during which said supporting film (12) provided with said protective substance (4) is pressed against said laminar support (9) provided with said synthetic substance (11).

7. Method according to claim 5 or 6, **characterized in that** said coupling step comprises a heating step during which said protective substance (4) and said synthetic substance (11) are heated to a given temperature (T1).

8. Method according to any of the claims from 5 to 7, **characterized in that** said embossing step comprises a heating step during which said first substance (4) and said second substance (11) are heated to a given temperature (T2).

9. Method according to any of the preceding claims, **characterized in that** a stretching step during which said supporting film (12) provided with said protective substance (4) and said laminar support (9) provided with said layer of synthetic substance (11) are stretched is carried out between said coupling step and said embossing step.

10. System (100; 200; 300; 400; 500) for producing imitation leather or upgraded leather (1) comprising a laminar support (9) and an upgrading layer (F), the system comprising:
- feeding means (70) suited to feed a supporting film (12) to which at least one layer of a protective substance (4) is applied;
- application means (18) suited to apply at least one layer of a synthetic substance (11) to at least one surface (8) of said laminar support (9);
- treating means (7) suited to treat said at least one layer (10) of said synthetic substance (11) in order to reduce the value of water content expressed as a percentage of the total weight of said synthetic substance (11);
- coupling means (19; 320) suited to couple said supporting film (12) provided with said protective substance (4) to said laminar support (9) provided with said layer (10) of synthetic substance (11), in such a way as to place said protective substance (4) in contact with said synthetic substance (11); and
- separating means (50) suited to remove said supporting film (12) from said at least one layer of said protective substance (4),
**characterized by**
embossing means (20; 320; 420) suited to exert a predetermined force per unit of surface area on said supporting film (12) and/or on said laminar support (9) in such a way as to press said protective substance (4) against said synthetic substance (11), said embossing means (20; 320; 420) comprising an embossed surface (102; 302; 402) which is placed in contact with said supporting film (12) in such a way that the morphological characteristics impressed on said embossed surface (102; 302; 402) are reproduced on said layer (10) of synthetic substance (11).

11. System (500) according to claim 10, **characterized in that** it comprises stretching means (520) between said coupling means (19) and said embossing means (20) for said supporting film (12) provided with said protective substance (4) and said laminar support (9) provided with said synthetic substance (11).

## Patentansprüche

1. Verfahren zur Herstellung eines Lederimitats oder eines veredelten Leders (1), einen laminaren Träger (9) und eine Veredelungsschicht (F) umfassend, wobei das Verfahren folgende Schritte umfasst:
- Auftrag von wenigstens einer Schicht (10) einer synthetischen Substanz (11) auf eine Oberfläche (8) des besagten laminaren Trägers (9);
- Auftrag von wenigstens einer Schicht einer Schutzsubstanz (4) auf eine Oberfläche eines Trägerfilms (12);
- Behandlung der besagten wenigstens einen Schicht (10) der besagten synthetischen Substanz (11) derart, dass die besagte synthetische Substanz (11) einen als Prozentanteil ihres Gesamtgewichts ausgedrückten Wassergehalt mit einem ersten Wert zwischen 12 % und 25 % aufweist;
- Kaschierung des besagten, mit der besagten Schutzsubstanz (4) versehenen Trägerfilms (12) mit dem besagten, mit der besagten Schicht (10) der synthetischen Substanz (11) versehenen laminaren Träger (9) derart, dass die besagte Schutzsubstanz (4) mit der besagten synthetischen Substanz (11) in Kontakt kommt;
- Prägen der besagten Schicht der synthetischen Substanz (11) durch Ausübung einer vorbestimmten Kraft pro Oberflächeneinheit auf den besagten Trägerfilm (12) und/oder auf den besagten laminaren Träger (9);
- Konsolidierung der Verbindung zwischen der besagten Schutzsubstanz (4) und der besagten synthetischen Substanz (11);
- Entfernung des besagten Trägerfilms (12) von der besagten, wenigstens einen Schicht der besagten Schutzsubstanz (4),
**dadurch gekennzeichnet, dass**
der Schritt der Ausübung der vorbestimmten Kraft durch Verwendung einer geprägten Oberfläche (102; 302; 402) erfolgt, welche derart mit dem besagten Trägerfilm (12) in Kontakt gebracht wird, dass die besagte Schutzsubstanz (4) an die besagte synthetische Substanz (11) angedrückt wird, und derart, dass die auf der besagten geprägten Oberfläche (102; 302; 402) eingedrückten morphologischen Merkmale auf der besagten Schicht der synthetischen Substanz (11) reproduziert werden.

2. Verfahren nach Patentanspruch 1, **dadurch gekennzeichnet, dass** der besagte erste Wert zwischen 15 % und 23 % liegt, vorzugsweise zwischen 17 % und 22%, und besonders bevorzugt gleich 18 % lautet.

3. Verfahren nach einem jeden der vorstehenden Patentansprüche, **dadurch gekennzeichnet, dass** der besagte Schritt der Behandlung der besagten wenigstens einen Schicht (10) der besagten synthetischen Substanz (11), so dass die besagte synthetische Substanz (11) den besagten ersten Wert erreicht, durch Erwärmung der besagten synthetischen Substanz (11) ausgeführt wird.

4. Verfahren nach einem jeden der vorstehenden Patentansprüche, **dadurch gekennzeichnet, dass** der besagte Konsolidierungsschritt einen Schritt der Erwärmung umfasst, während dem die besagte Schutzsubstanz (4) und die besagte synthetische Substanz (11) auf eine gegebene Temperatur (T5) erwärmt werden.

5. Verfahren nach einem jeden der vorstehenden Patentansprüche, **dadurch gekennzeichnet, dass** der besagte Prägeschritt nach dem besagten Kaschierungsschritt ausgeführt wird.

6. Verfahren nach Patentanspruch 5, **dadurch gekennzeichnet, dass** der besagte Kaschierungsschritt durch einen Schritt des Andrückens ausgeführt wird, während dem der besagte Trägerfilm (12) mit der besagten Schutzsubstanz (4) an den laminaren Träger (9) mit der besagten synthetischen Substanz (11) angedrückt wird.

7. Verfahren nach Patentanspruch 5 oder 6, **dadurch gekennzeichnet, dass** der besagte Kaschierungsschritt einen Schritt der Erwärmung umfasst, während dem die besagte Schutzsubstanz (4) und die besagte synthetische Substanz (11) auf eine gegebene Temperatur (T1) erwärmt werden.

8. Verfahren nach einem jeglichen der Patentansprüche von 5 bis 7, **dadurch gekennzeichnet, dass** der besagte Prägeschritt einen Schritt der Erwärmung umfasst, während dem die besagte erste Substanz (4) und die besagte zweite Substanz (11) auf eine gegebene Temperatur (T2) erwärmt werden.

9. Verfahren nach einem jeglichen der vorstehenden Patentansprüche, **dadurch gekennzeichnet, dass** zwischen dem besagten Kaschierungsschritt und dem besagten Prägeschritt ein Dehnungsschritt ausgeführt wird, während dem der besagte Trägerfilm (12) mit der besagten Schutzsubstanz (4) und der besagte laminare Träger (9) mit der besagten synthetischen Substanz (11) gedehnt werden.

10. System (100, 200, 300, 400; 500) zur Herstellung eines Lederimitats oder eines veredelten Leders (1), einen laminaren Träger (9) und eine Veredelungsschicht (F) umfassend, wobei das System Folgendes umfasst:
- Zuführmittel (70), dazu geeignet, einen Trägerfilm (12) zuzuführen, an dem wenigstens eine Schicht einer Schutzsubstanz (4) aufgebracht wird;
- Auftragmittel (18), dazu geeignet, wenigstens eine Schicht einer synthetischen Substanz (11) auf wenigstens eine Oberfläche (8) des besagten laminaren Trägers (9) aufzutragen;
- Behandlungsmittel (7), dazu geeignet, die besagte wenigstens eine Schicht (10) der besagten synthetischen Substanz (11) zu behandeln, um den als Prozentanteil des Gesamtgewichts der besagten synthetischen Substanz (11) ausgedrückten Wert des Wassergehalts zu reduzieren;
- Kaschierungsmittel (19, 320), dazu geeignet, den besagten, mit der besagten Schutzsubstanz (4) versehenen Trägerfilm (12) mit dem besagten, mit der besagten Schicht (10) der synthetischen Substanz (11) versehenen laminaren Träger (9) derart zu kaschieren, dass die besagte Schutzsubstanz (4) mit der besagten synthetischen Substanz (11) in Kontakt kommt; und
- Ablösemittel (50), dazu geeignet, den besagten Trägerfilm (12) von der wenigstens einen Schicht der besagten Schutzsubstanz (4) zu entfernen,
**gekennzeichnet durch**
Prägemittel (20, 320, 420), dazu geeignet, auf den besagten Trägerfilm (12) und/oder auf den besagten laminaren Träger (9) derart eine vorbestimmte Kraft pro Oberflächeneinheit auszuüben, dass die besagte Schutzsubstanz (4) an die besagte synthetische Substanz (11) angepresst wird, wobei die besagten Prägemittel (20; 320; 420) eine geprägte Oberfläche (102; 302; 402) umfassen, die derart mit dem besagten Trägerfilm (12) in Kontakt gebracht wird, dass die auf der besagten geprägten Oberfläche (102; 302; 402) eingedrückten morphologischen Merkmale auf der besagten Schicht (10) der synthetischen Substanz (11) reproduziert werden.

11. System (500) nach Patentanspruch 10, **dadurch gekennzeichnet, dass** es Dehnungsmittel (520) zwischen den besagten Kaschierungsmitteln (19) und den besagten Prägemitteln (20) für den besagten Trägerfilm (12) mit der besagten Schutzsubstanz (4) und den besagten laminaren Träger (9) mit der besagten synthetischen Substanz (11) umfasst.

## Revendications

1. Méthode pour la réalisation d'imitation cuir ou cuir amélioré (1) comprenant un support laminaire (9) et une couche d'amélioration (F) la méthode comprenant les phases suivantes :
- application d'au moins une couche (10) d'une substance synthétique (11) sur une surface (8) dudit support laminaire (9) ;
- application d'au moins une couche d'une substance protectrice (4) sur une surface d'une pellicule de support (12) ;
- traitement de ladite au moins une couche (10) de ladite substance synthétique (11) de façon à ce que ladite substance synthétique (11) présente une teneur en eau exprimée comme un pourcentage de son poids total ayant une première valeur comprise entre 12 % et 25 % ;
- accouplement de ladite pellicule de support (12) pourvue de ladite substance protectrice (4) audit support laminaire (9) pourvu de ladite couche (10) de substance synthétique (11) de façon à mettre ladite substance protectrice (4) en contact avec ladite substance synthétique (11) ;
- gaufrage de ladite couche de substance synthétique (11) en appliquant une force prédéterminée par unité de surface sur ladite pellicule de support (12) et/ou sur ledit support laminaire (9) ;
- consolidation de l'union de ladite substance protectrice (4) et de ladite substance synthétique (11) ;
- enlèvement de ladite pellicule de support (2) de ladite au moins une couche de ladite substance protectrice (4),
**caractérisée en ce que**
la phase dans laquelle on exerce la force prédéterminée est atteinte en utilisant une surface gaufrée (102 ; 302 ; 402) qui est mise en contact avec ladite pellicule de support (12) de manière à appuyer ladite substance protectrice (4) contre ladite substance synthétique (11) et de manière à ce que les caractéristiques morphologiques imprimées sur ladite surface gaufrée (102 ; 302 ; 402) soient reproduites sur ladite couche de substance synthétique (11).

2. Méthode selon la revendication 1, **caractérisée en ce que** ladite première valeur est comprise entre 15 % et 23 %, plus préférablement comprise entre 17 % et 22 % et encore plus préférablement égale à 18 %.

3. Méthode selon l'une quelconque des revendications précédentes, **caractérisée en ce que** ladite phase de traitement de ladite au moins une couche (10) de ladite substance synthétique (11) de manière que ladite substance synthétique (11) atteigne ladite première valeur est obtenue en chauffant ladite substance synthétique (11).

4. Méthode selon l'une quelconque des revendications précédentes, **caractérisée en ce que** ladite phase de consolidation comprend une phase de chauffage pendant laquelle ladite substance protectrice (4) et ladite substance synthétique (11) sont chauffées à une température donnée (T5).

5. Méthode selon l'une quelconque des revendications précédentes, **caractérisée en ce que** ladite phase de gaufrage est réalisée successivement à ladite phase d'accouplement.

6. Méthode selon la revendication 5, **caractérisée en ce que** ladite phase d'accouplement est réalisé au moyen d'une phase de pression pendant laquelle ladite pellicule de support (12) pourvue de ladite substance protectrice (4) est pressée contre ledit support laminaire (9) pourvu de ladite substance synthétique (11).

7. Méthode selon la revendication 5 ou 6, **caractérisée en ce que** ladite phase d'accouplement comprend une phase de chauffage pendant laquelle ladite substance protectrice (4) et ladite substance synthétique (11) sont chauffées à une température donnée (T1).

8. Méthode selon l'une quelconque des revendications de 5 à 7, **caractérisée en ce que** ladite phase de gaufrage comprend une phase de chauffage pendant laquelle ladite première substance (4) et ladite deuxième substance (11) sont chauffées à une température donnée (T2).

9. Méthode selon l'une quelconque des revendications précédentes, **caractérisée en ce qu'**une phase d'allongement, durant laquelle ladite pellicule de support (12) pourvue de ladite substance protectrice (4) et ledit support laminaire (9) pourvu de ladite couche de substance synthétique (11) sont allongés, est réalisée entre ladite phase d'accouplement et ladite phase de gaufrage.

10. Système (100 ; 200 ; 300 ; 400 ; 500) pour la réalisation d'imitation cuir ou de cuir amélioré (1) comprenant un support laminaire (9) et une couche d'amélioration (F), ledit système comprenant :
- des moyens d'alimentation (70) aptes à alimenter une pellicule de support (12) sur laquelle est appliquée au moins une couche d'une substance protectrice (4) ;
- des moyens d'application (18) aptes à appliquer au moins une couche d'une substance synthétique (11) sur au moins une surface (8) dudit support laminaire (9) ;
- des moyens de traitement (7) aptes à traiter ladite au moins une couche (10) de ladite substance synthétique (11) de manière à réduire la teneur en eau exprimée comme un pourcentage du poids total de ladite substance synthétique (11) ;
- des moyens d'accouplement (19 ; 320) aptes à accoupler ladite pellicule de support (12) pourvue de ladite substance protectrice (4) audit support laminaire (9) pourvu de ladite couche (10) de substance synthétique (11) de manière à mettre ladite substance protectrice (4) en contact avec ladite substance synthétique (11) ; et
- des moyens de séparation (50) aptes à enlever ladite pellicule de support (12) de ladite au moins une couche de ladite substance protectrice (4),
**caractérisé par**
des moyens de gaufrage (20 ; 320 ; 420) aptes à exercer une force prédéterminée par unité de surface sur ladite pellicule de support (12) et/ou sur ledit support laminaire (9) de manière à presser ladite substance protectrice (4) contre ladite substance synthétique (11), lesdits moyens de gaufrage (20 ; 320 ; 420) comprenant une surface gaufrée (102 ; 302 ; 402) qui est mise en contact avec ladite pellicule de support (12) de manière à ce que les caractéristiques morphologiques imprimées sur ladite surface gaufrée (102 ; 302 ; 402) sont reproduites sur ladite couche (10) de substance synthétique (11).

11. Système (500) selon la revendication 10, **caractérisé en ce qu'**il comprend des moyens d'allongement (520) entre lesdits moyens d'accouplement (19) et lesdits moyens de gaufrage (20) pour ladite pellicule de support (12) pourvue de ladite substance protectrice (4) et ledit support laminaire (9) pourvu de ladite substance synthétique (11).
